# EUROPEAN PATENT APPLICATION

(11) **EP 4 794 092 A1**
(43) Date of publication of application: **19.08.2026**
(21) Application number: 25867215.3
(22) Date of filing: 19.11.2025
(51) Int. Cl.: H01M 50/30, H01M 50/383, H01M 10/658, H01M 50/233

(54) **BATTERY MODULE AND BATTERY PACK COMPRISING SAME**

(30) Priority: 12.12.2024 KR 20240184661
(71) Applicant: LG Energy Solution, Ltd., Seoul 07335 (KR)
(72) Inventor: KWON, Joo Yeok, Yuseong-Gu, Daejeon 34122 (KR); JUNG, Hye Mi, Yuseong-Gu, Daejeon 34122 (KR); KIM, Kwang Mo, Yuseong-Gu, Daejeon 34122 (KR)
(74) Representative: Plasseraud IP
(86) International application number: PCT/KR2025/019133
(87) International publication number: WO 2026/127422

(57) **Abstract**

A battery module according to exemplary embodiments may include battery cells, a module frame, and a first thermal barrier, wherein the module frame may accommodate the battery cells, and the module frame includes a top plate including vent holes, and the first thermal barrier may be disposed between the battery cells and the top plate.

## Description

### [Technical Field]

The present disclosure relates to a battery module and a battery pack including the same.

This application is based on and claims priority from Korean Patent Application No. 10-2024-0184661, filed on December 12, 2024, the disclosure of which is incorporated herein in its entirety by reference.

### [Background]

Secondary batteries can be used repeatedly for extended periods of time through recharging. Secondary batteries are used in a wide range of applications, including mobility devices, portable electronic devices, and energy storage systems (ESS). In particular, the demand for secondary batteries for mobility applications is increasing further in order to reduce dependence on fossil fuels and decrease carbon emissions. However, concerns regarding the safety of secondary batteries for mobility applications remain an important issue that must be addressed.

The fundamental unit of a secondary battery for mobility applications is a battery cell. Mobility devices use multiple battery cells to achieve required performance in terms of output power and driving range. A battery pack is mounted in a mobility device, the battery pack is composed of multiple battery modules, and each battery module is composed of multiple battery cells. The battery modules constituting the battery pack are adjacent to one another. Accordingly, when thermal runaway occurs in one battery module, heat propagation to other battery modules can occur readily, potentially causing thermal runaway in those other battery modules as well. When thermal runaway and heat propagation occur in a chain reaction in this manner, a large explosion or fire may result.

### [Summary]

### [Technical Problem]

The problem that the present disclosure seeks to solve is to provide a battery module and a battery pack with improved safety.

### [Technical Solution]

Exemplary embodiments of the present disclosure capable of solving the above problem are as follows.

A battery module according to exemplary embodiments may include:
battery cells;
a module frame accommodating the battery cells, wherein the module frame comprises a top plate comprising vent holes; and
a first thermal barrier disposed between the battery cells and the top plate.

In exemplary embodiments, the top plate includes a first surface facing the battery cells, and the first thermal barrier may be coated on the first surface.

In exemplary embodiments, the first thermal barrier may not overlap the vent holes in a first direction perpendicular to the top plate.

In exemplary embodiments, a melting temperature of the first thermal barrier may be higher than a melting temperature of the top plate.

A battery module according to exemplary embodiments may include:
battery cells;
a module frame accommodating the battery cells, wherein the module frame comprises a top plate comprising vent holes; and
a second thermal barrier spaced apart from the battery cells with the top plate interposed therebetween.

In exemplary embodiments, the top plate includes a second surface that is an opposite surface of a surface facing the battery cells, and the second thermal barrier may be coated on the second surface.

In exemplary embodiments, the second thermal barrier may not overlap the vent holes in a first direction perpendicular to the top plate.

In exemplary embodiments, a melting temperature of the second thermal barrier may be higher than a melting temperature of the top plate.

A battery module according to exemplary embodiments may include:
battery cells;
a module frame accommodating the battery cells, wherein the module frame comprises a top plate comprising vent holes;
a first thermal barrier disposed between the battery cells and the top plate; and
a second thermal barrier spaced apart from the battery cells with the top plate interposed therebetween.

In exemplary embodiments, the top plate includes a first surface facing the battery cells and a second surface that is an opposite surface of the first surface, the first thermal barrier is coated on the first surface, and the second thermal barrier may be coated on the second surface.

In exemplary embodiments, the first thermal barrier does not overlap the vent holes in a first direction perpendicular to the top plate, the second thermal barrier does not overlap the vent holes in the first direction, and the first thermal barrier may fully overlap the second thermal barrier in the first direction.

In exemplary embodiments, a melting temperature of the first thermal barrier is higher than a melting temperature of the top plate, a melting temperature of the second thermal barrier is higher than a melting temperature of the top plate, and a melting temperature of the first thermal barrier may be equal to a melting temperature of the second thermal barrier.

A battery pack according to exemplary embodiments may include:
a pack housing comprising a base plate and a side wall; and
battery modules disposed on the base plate, wherein
each of the battery modules may be one of the aforementioned battery modules.

### [Advantageous Effects]

According to exemplary embodiments of the present disclosure, even when thermal runaway occurs, the top plate is prevented from melting by the thermal barrier, thereby making it possible to delay thermal runaway and heat propagation. In addition, venting can continue to occur through the vent holes of the top plate.

The effects of the exemplary embodiments of the present disclosure are not limited to the effects mentioned above, and other effects not mentioned herein can be clearly understood by a person of ordinary skill in the technical field to which the present disclosure pertains from the following description. That is, effects not intended by the implementation of the exemplary embodiments of the present disclosure can also be clearly understood by a person of ordinary skill in the technical field to which the present disclosure pertains.

### [Brief Description of the Drawings]

FIG. 1 is a perspective view of a battery module according to first embodiments.
FIG. 2 is a cross-sectional view taken along the cutting line II-II' of FIG. 1.
FIG. 3 is a cross-sectional view for explaining second embodiments.
FIG. 4 is a cross-sectional view for explaining third embodiments.
FIG. 5 is a plan view of a battery pack according to fourth embodiments.

### [Best Mode for Carrying out the Invention]

The terms and words used herein should not be construed as being limited to their ordinary or dictionary meanings, but should be interpreted in accordance with the spirit of the present disclosure based on the principle that an inventor may appropriately define the meanings of terms and words to best describe the invention.

In the present disclosure, the terms such as "include" or "have" are intended to specify the presence of features, numbers, steps, operations, components, elements, or combinations thereof described in the disclosure, and should be understood as not precluding the possibility of the presence or addition of one or more other features, numbers, steps, operations, components, elements, or combinations thereof. In addition, when a part such as a layer, film, region, or plate is described as being "on" another part, this includes not only a case where the part is directly on the other part, but also a case where another part is interposed therebetween. Conversely, when a part such as a layer, film, region, or plate is described as being "under" another part, this includes not only a case where the part is directly under the other part, but also a case where another part is interposed therebetween.

It should be understood that the embodiments and drawings are merely examples of the present disclosure and do not represent the entirety of the technical spirit of the present disclosure, and that various equivalents and modified examples capable of replacing them may exist.

In describing the present disclosure, detailed descriptions of known configurations or functions will be omitted when they are deemed to obscure the gist of the present disclosure.

The drawings are provided to more completely illustrate the present disclosure to those ordinarily skilled in the art. Therefore, the shapes, sizes, and other aspects of the components illustrated in the drawings may be exaggerated, omitted, or schematically illustrated for clarity. The shapes, sizes, proportions, and numbers of respective components in the drawings do not necessarily reflect those of the actual components.

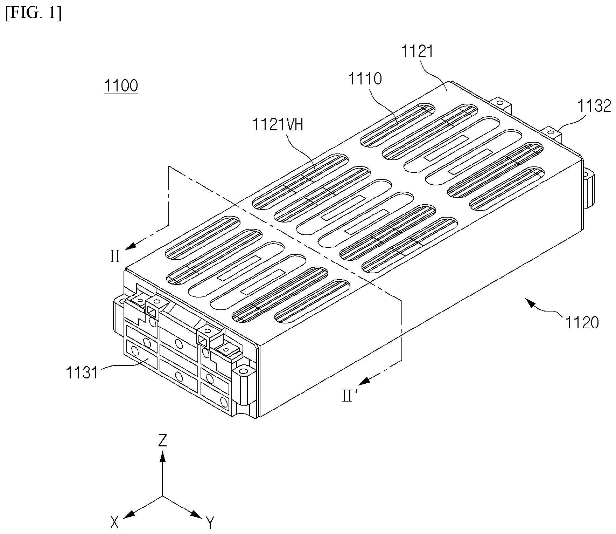

In the present disclosure, a three-dimensional Cartesian coordinate system is used for convenience of explanation to describe the positions of components, the shapes of components, and the relationships between components. The X-axis, Y-axis, and Z-axis are shown in FIGS. 1 through 5. In the present disclosure, "X direction" means a direction parallel to the X-axis. In the present disclosure, "Y direction" means a direction parallel to the Y-axis. In the present disclosure, "Z direction" means a direction parallel to the Z-axis.

In the present disclosure, "+X direction" means the same direction as the arrow direction of the X-axis shown in FIGS. 1 through 4. In the present disclosure, "-X direction" means the direction opposite to the arrow direction of the X-axis shown in FIGS. 1 through 4. In the present disclosure, "+Y direction" means the same direction as the arrow direction of the Y-axis shown in FIGS. 1 through 4. In the present disclosure, "-Y direction" means the direction opposite to the arrow direction of the Y-axis shown in FIGS. 1 through 4. In the present disclosure, "+Z direction" means the same direction as the arrow direction of the Z-axis shown in FIGS. 1 through 4. In the present disclosure, "-Z direction" means the direction opposite to the arrow direction of the Z-axis shown in FIGS. 1 through 4.

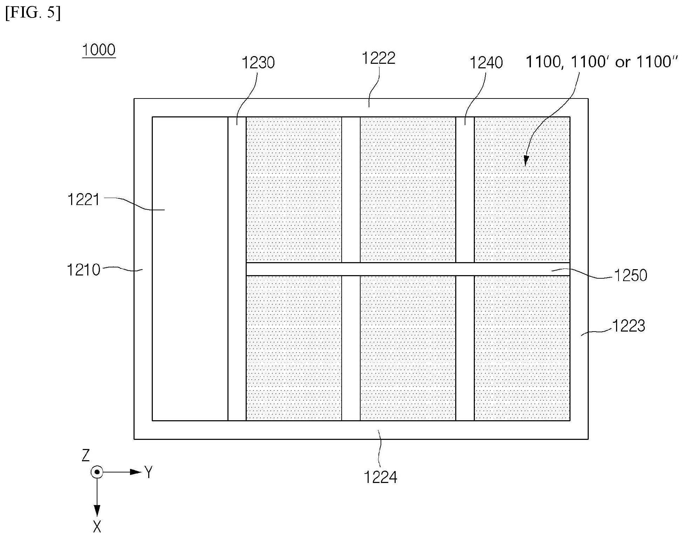

The arrow direction of the X-axis shown in FIG. 5 is unrelated to the "+X direction" and "-X direction" of the present disclosure. The arrow direction of the Y-axis shown in FIG. 5 is unrelated to the "+Y direction" and "-Y direction" of the present disclosure. The arrow direction of the Z-axis shown in FIG. 5 is unrelated to the "+Z direction" and "-Z direction" of the present disclosure.

Hereinafter, exemplary embodiments of the present disclosure will be described in detail with reference to the drawings.

### (First Embodiments)

FIG. 1 is a perspective view of a battery module according to first embodiments.

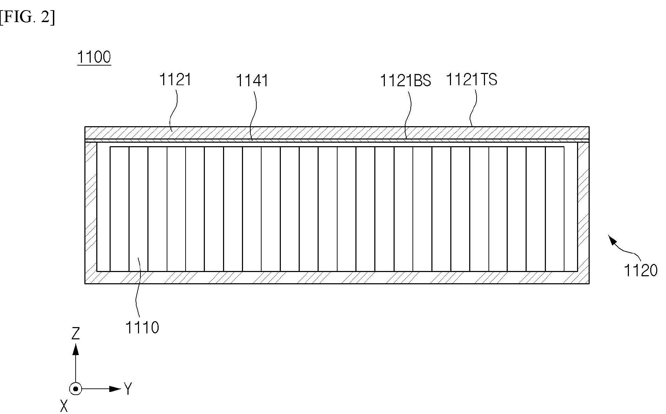

FIG. 2 is a cross-sectional view taken along the cutting line II-II' of FIG. 1.

Referring to FIGS. 1 and 2, the battery module 1100 may include battery cells 1110, a module frame 1120, a first busbar assembly, a second busbar assembly, a first insulating cover, a second insulating cover, a first end plate 1131, a second end plate 1132, and a first thermal barrier 1141.

Each of the battery cells 1110 may be a lithium secondary battery. Each of the battery cells 1110 may include an electrode assembly, an electrolyte, and a cell case. The electrode assembly may include a positive electrode, a negative electrode, and a separator. The positive electrode may include a positive electrode active material layer, a positive electrode current collector, and a positive electrode tab. The negative electrode may include a negative electrode active material layer, a negative electrode current collector, and a negative electrode tab. The electrode assembly may be of a jelly-roll type or a stack-type. The jelly-roll type may have a structure in which the positive electrode, the negative electrode, and the separator are wound together. The stack-type may have a structure in which a first electrode unit including a first positive electrode, a first negative electrode, and a first separator and a second electrode unit including a second positive electrode, a second negative electrode, and a second separator are stacked with a third separator interposed therebetween. The electrolyte may be of a liquid type or a gel type. The cell case may be cylindrical, prismatic, or pouch-type. When the cell case is cylindrical or prismatic, the positive electrode tab and the negative electrode tab may be welded to the cell case. When the cell case is pouch-type, each of the battery cells 1110 may include a positive electrode lead and a negative electrode lead. The positive electrode lead may be electrically connected to one or more positive electrode tabs, and the negative electrode lead may be electrically connected to one or more negative electrode tabs. The positive electrode lead and the negative electrode lead may protrude toward one side of the pouch-type cell case. The positive electrode lead and the negative electrode lead may protrude in the same direction or may protrude in opposite directions to each other.

In the present disclosure, only embodiments in which each of the battery cells 1110 is a pouch cell in which the positive electrode lead and the negative electrode lead protrude in opposite directions are described. A person of ordinary skill in the technical field to which the present disclosure pertains will be able to readily arrive at embodiments in which each of the battery cells 1110 is a pouch cell in which the positive electrode lead and the negative electrode lead protrude in the same direction, a cylindrical cell, or a prismatic cell, based on the present disclosure.

Some of the battery cells 1110 may include a positive electrode lead protruding in the +X direction and a negative electrode lead protruding in the -X direction. Some of the battery cells 1110 may include a positive electrode lead protruding in the -X direction and a negative electrode lead protruding in the +X direction. The battery cells may be arranged in the Y direction.

The battery cells 1110 may constitute banks. Each of the banks may include battery cells 1110 connected in parallel with each other. The banks may be connected to each other in series. The banks may include a first bank, intermediate banks, and a last bank.

When each bank includes m battery cells 1110 and the number of banks included in the battery module 1100 is n, the connection configuration of the battery cells 1110 may be referred to as m-parallel n-series (mP-nS). The number of battery cells 1110 included in each battery module 1100 and the connection configuration of the battery cells 1110 may be determined according to the current, voltage, and dimensions required for each battery module 1100.

The module frame 1120 may accommodate the pouch cells 1110. The module frame 1120 may be open in the X direction. The module frame 1120 may include a top plate 1121 including vent holes 1121VH. The module frame 1120 may be formed by coupling a U-frame and the top plate 1121 by welding or the like. The module frame 1120 may be a mono frame (or an integrated frame), and the top plate 1121 may be a part of the mono frame. The module frame 1120 may have an approximately hollow rectangular prism shape.

The top plate 1121 may be substantially perpendicular to the Z direction. The top plate 1121 may include a first surface 1121BS facing the battery cells 1110 and a second surface 1121TS that is the opposite surface of the first surface 1121BS. The first surface 1121BS of the top plate 1121 may be referred to as the lower surface of the top plate 1121. The second surface 1121TS of the top plate 1121 may be referred to as the upper surface of the top plate 1121.

The melting temperature of the top plate 1121 may be lower than the melting temperature of the first thermal barrier 1141. As a non-limiting example, the melting temperature of the top plate 1121 may be approximately 300°C to 1500°C. As a non-limiting example, the top plate 1121 may include one or more of aluminum, aluminum alloy, steel, and stainless steel.

The first busbar assembly may include a first busbar frame, a positive electrode busbar, a negative electrode busbar, and first intermediate busbars. The first busbar assembly may cover the opening of the module frame 1120 in the +X direction.

The first busbar frame may include first slits. Each of the first slits may extend in the Z direction. The positive electrode lead or the negative electrode lead of a corresponding one of the battery cells 1110 may pass through each of the first slits. The positive electrode lead or the negative electrode lead that has passed through each of the first slits may be bent in the Y direction and joined to a corresponding one of the positive electrode busbar, the negative electrode busbar, and the first intermediate busbars by welding or the like. The first busbar frame may include a material with high electrical insulation and fire resistance.

The positive electrode busbar, the negative electrode busbar, and the first intermediate busbars may be fixed to the first busbar frame. The first intermediate busbars may be located between the positive electrode busbar and the negative electrode busbar. The positive electrode busbar may include a portion extending in the Z direction and a portion bent in the +X direction. The negative electrode busbar may include a portion extending in the Z direction and a portion bent in the +X direction. Each of the first intermediate busbars may have an approximately O-shape. The positive electrode leads of the first bank may be coupled to the positive electrode busbar by welding or the like. The negative electrode leads of the last bank may be coupled to the negative electrode busbar by welding or the like. Electrical connection between the battery module 1100 and an external system may be established through the positive electrode busbar and the negative electrode busbar. The positive electrode leads or negative electrode leads of a corresponding one of the intermediate banks may be coupled to each of the first intermediate busbars by welding or the like. The first bank, the intermediate banks, and the last bank may be connected to each other in series by the first intermediate busbars.

The second busbar assembly may include a second busbar frame and second intermediate busbars. The second busbar assembly may cover the opening of the module frame 1120 in the -X direction.

The second busbar frame may include second slits. Each of the second slits may extend in the Z direction. The positive electrode lead or the negative electrode lead of a corresponding one of the battery cells 1110 may pass through each of the second slits. The positive electrode lead or the negative electrode lead that has passed through each of the second slits may be bent in the Y direction and coupled to a corresponding one of the second intermediate busbars by welding or the like. The second busbar frame may include a material with high electrical insulation and fire resistance.

The second intermediate busbars may be fixed to the second busbar frame. Each of the second intermediate busbars may have an approximately O-shape. The positive electrode leads or negative electrode leads of a corresponding one of the intermediate banks may be coupled to each of the second intermediate busbars by welding or the like. The first bank, the intermediate banks, and the last bank may be connected to each other in series by the second intermediate busbars.

The first insulating cover may cover the first busbar assembly in the +X direction. The first insulating cover may include inner holes. Through one of the inner holes, the portion of the positive electrode busbar bent in the +X direction may be exposed to the outside of the battery module 1100, and through the other inner hole, the portion of the negative electrode busbar bent in the +X direction may be exposed to the outside of the battery module 1100. The first insulating cover may include a material with high electrical insulation and fire resistance. The second insulating cover may cover the second busbar assembly in the -X direction. The second insulating cover may include a material with high electrical insulation and fire resistance.

The first end plate 1131 may cover the first insulating cover in the +X direction. The first end plate 1131 may include outer holes. Each of the outer holes of the first end plate 1131 may be connected to a corresponding one of the inner holes of the first insulating cover. Through one of the outer holes, the portion of the positive electrode busbar bent in the +X direction may be exposed to the outside of the battery module 1100, and through the other outer hole, the portion of the negative electrode busbar bent in the +X direction may be exposed to the outside of the battery module 1100. The first end plate 1131 may include a material with high rigidity and heat resistance. The second end plate 1132 may cover the second insulating cover in the -X direction. The second end plate 1132 may include a material with high rigidity and heat resistance.

The first thermal barrier 1141 may prevent the temperature of the top plate 1121 from rising above its melting point even when thermal runaway occurs in the battery module 1100 and the temperature of the battery module 1100 rises rapidly, thereby preventing the top plate 1121 from melting. Accordingly, thermal runaway in the battery module 1100 may be delayed, heat propagation to an adjacent battery module may be delayed, and venting may continue to occur through the vent holes 1121VH of the top plate 1121. Ultimately, the safety of the battery module 1100 and the battery pack 1000 can be improved.

The first thermal barrier 1141 may be disposed between the battery cells 1110 and the top plate 1121. The first thermal barrier 1141 may prevent or delay the heat generated inside the battery module 1100 from raising the temperature of the top plate 1121. The first thermal barrier 1141 may be coated on the first surface 1121BS of the top plate 1121.

The first thermal barrier 1141 may not overlap the vent holes 1121VH of the top plate 1121 in the Z direction. That is, the vent holes 1121VH may remain open.

The melting temperature of the first thermal barrier 1141 may be higher than the melting temperature of the top plate 1121. As a non-limiting example, the melting temperature of the first thermal barrier 1141 may be approximately 1000°C or higher. As a non-limiting example, the melting temperature of the first thermal barrier 1141 may be approximately 1500°C or higher. As a non-limiting example, the melting temperature of the first thermal barrier 1141 may be approximately 2000°C or higher. As a non-limiting example, the first thermal barrier 1141 may include one or more of calcium silicate, calcium magnesium silicate, glass fiber, carbon fiber, alumina, silica, magnesia, boron nitride, and titania.

### (Second Embodiments)

The second embodiments are the same as the first embodiments except that the battery module 1100' includes a second thermal barrier 1142 instead of the first thermal barrier 1141, and therefore, descriptions of portions identical to those of the first exemplary embodiments will be omitted.

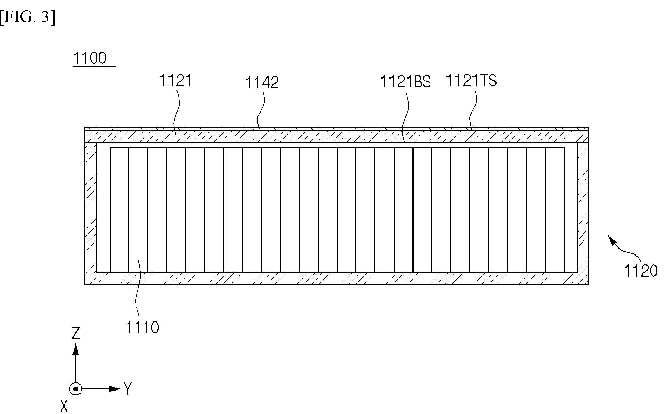

FIG. 3 is a cross-sectional view for explaining the second embodiments.

Referring to FIG. 3, the battery module 1100' may include a second thermal barrier 1142. Even when thermal runaway occurs in another battery module adjacent to the battery module 1100' and heat propagates to the battery module 1100', causing the temperature of the battery module 1100' to rise rapidly, the second thermal barrier 1142 may prevent the temperature of the top plate 1121 from rising above its melting point, thereby preventing the top plate 1121 from melting. Accordingly, thermal runaway in the battery module 1100' may be prevented or delayed, heat propagation to yet another adjacent battery module may be delayed, and venting may continue to occur through the vent holes 1121VH of the top plate 1121. Ultimately, the safety of the battery module 1100' and the battery pack 1000 can be improved.

The second thermal barrier 1142 may be spaced apart from the battery cells 1110 in the Z direction with the top plate 1121 interposed therebetween. The second thermal barrier 1142 may prevent or delay heat from outside the battery module 1100' from raising the temperature of the top plate 1121. The second thermal barrier 1142 may be coated on the second surface 1121TS of the top plate 1121.

The second thermal barrier 1142 may not overlap the vent holes 1121VH of the top plate 1121 in the Z direction. That is, the vent holes 1121VH may remain open.

The melting temperature of the second thermal barrier 1142 may be higher than the melting temperature of the top plate 1121. As a non-limiting example, the melting temperature of the second thermal barrier 1142 may be approximately 1000°C or higher. As a non-limiting example, the melting temperature of the second thermal barrier 1142 may be approximately 1500°C or higher. As a non-limiting example, the melting temperature of the second thermal barrier 1142 may be approximately 2000°C or higher. As a non-limiting example, the second thermal barrier 1142 may include one or more of calcium silicate, calcium magnesium silicate, glass fiber, carbon fiber, alumina, silica, magnesia, boron nitride, and titania.

### (Third Embodiments)

The third embodiments are the same as the first embodiments except that the battery module 1100" further includes the second thermal barrier 1142, and therefore, descriptions of portions identical to those of the first exemplary embodiments will be omitted. The third embodiments are the same as the second embodiments except that the battery module 1100" further includes the first thermal barrier 1141, and therefore, descriptions of portions identical to those of the second embodiments will be omitted.

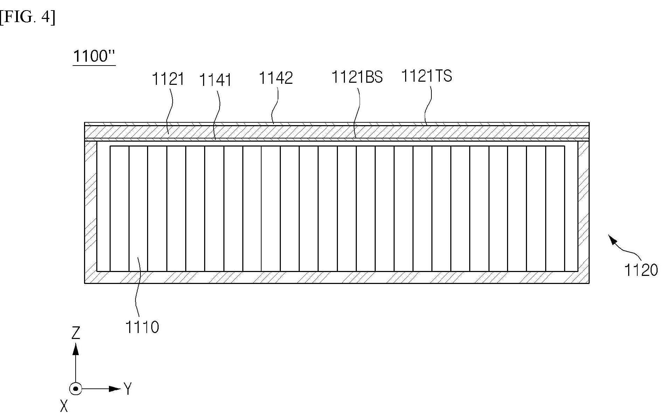

FIG. 4 is a cross-sectional view for explaining the third embodiments.

Referring to FIG. 4, the battery module 1100" may include a first thermal barrier 1141 and a second thermal barrier 1142. The first thermal barrier 1141 and the second thermal barrier 1142 may fully overlap each other in the Z direction. The melting temperature of the first thermal barrier 1141 and the melting temperature of the second thermal barrier 1142 may be substantially equal to each other.

### (Fourth Embodiments)

FIG. 5 is a plan view of a battery pack according to the fourth embodiments.

Referring to FIG. 5, the battery pack 1000 may include battery modules 1100, 1100', or 1100", a pack housing 1200, electronic components, and a pack lid. The battery pack 1000 may be the final form of a battery system mounted in a mobility device. Each of the battery modules 1100, 1100', or 1100" is the same as described in the first through third embodiments.

The layout of the battery modules 1100, 1100', or 1100" may be A rows by B columns (where A is an integer of 1 or more, B is an integer of 1 or more, and one of A and B is not 1). The number of battery modules 1100, 1100', or 1100" and the layout of the battery modules 1100, 1100', or 1100" may be determined according to the current, voltage, and dimensions required for the battery pack 1000. In the present disclosure, only embodiments in which the layout of the battery modules 1100, 1100', or 1100" is 2 rows by 3 columns are described. A person of ordinary skill in the technical field to which the present disclosure pertains will be able to readily arrive at embodiments in which the layout of the battery modules 1100, 1100', or 1100" is not 2 rows by 3 columns, based on the present disclosure.

The first end plate 1131 of each of the battery modules 1100, 1100', or 1100" may be closer to the center beam 1250 than the second end plate 1132 is.

The pack housing 1200 may protect the battery modules 1100, 1100', or 1100" and the electronic components from external factors such as shock, vibration, dust, and moisture. The pack housing 1200 may include a base plate 1210, side walls 1221, 1222, 1223, 1224, a first cross beam 1230, second cross beams 1240, and a center beam 1250.

The base plate 1210 may support the battery modules 1100, 1100', or 1100", the first cross beam 1230, the second cross beams 1240, the center beam 1250, and the electronic components. The base plate 1210 may have a flat shape. The base plate 1210 may be substantially perpendicular to the Z direction. The base plate 1210 may include a metal. The base plate 1210 may include one or more of aluminum, aluminum alloy, steel, and stainless steel.

The side walls 1221, 1222, 1223, 1224 may be located around the perimeter of the base plate 1210. Each of the side walls 1221, 1222, 1223, 1224 may be fixed to the base plate 1210 by bolting, welding, or the like. Each of the side walls 1221, 1222, 1223, 1224 may be integrated with the base plate 1210. Some of the side walls 1221, 1222, 1223, 1224 may be in contact with the upper surface of the base plate 1210. Some of the side walls 1221, 1222, 1223, 1224 may be in contact with the side surface of the base plate 1210.

The side walls 1221, 1222, 1223, 1224 may surround the battery modules 1100, 1100', or 1100", the first cross beam 1230, the second cross beams 1240, the center beam 1250, and the electronic components. Each of the side walls 1221, 1223 may be substantially perpendicular to the Y direction. Each of the side walls 1222, 1224 may be substantially perpendicular to the X direction. Each of the side walls 1221, 1222, 1223, 1224 may include a metal. Each of the side walls 1221, 1222, 1223, 1224 may include one or more of aluminum, aluminum alloy, steel, and stainless steel.

One or more venting devices may be installed on one or more of the side walls 1221, 1222, 1223, 1224. One or more venting devices may be installed on the side wall 1221. The venting device may be configured to provide a pathway through which high-temperature gas or the like generated inside the battery pack 1000 can be discharged to the outside of the battery pack 1000 in the event of an incident such as a thermal runaway event inside the battery pack 1000. The venting device may be configured to prevent dust, moisture, water, and the like from outside the battery pack 1000 from entering the inside of the battery pack 1000.

The first cross beam 1230 may be disposed on the base plate 1210. The first cross beam 1230 may be fixed to the base plate 1210 by bolting, welding, or the like. The first cross beam 1230 may isolate the electronic components from the battery modules 1100, 1100', or 1100" in the Y direction. The first cross beam 1230 may be positioned between the electronic components and the battery modules 1100, 1100', or 1100". The first cross beam 1230 may be substantially perpendicular to the Y direction. The first cross beam 1230 may extend in the X direction between the side wall 1222 and the side wall 1224. The first cross beam 1230 may include a metal. The first cross beam 1230 may include one or more of aluminum, aluminum alloy, steel, and stainless steel.

Each of the second cross beams 1240 may be disposed on the base plate 1210. Each of the second cross beams 1240 may be fixed to the base plate 1210 by bolting, welding, or the like. Each of the second cross beams 1240 may isolate the battery modules 1100, 1100', or 1100" in the Y direction. Each of the second cross beams 1240 may be positioned between two corresponding battery modules 1100, 1100', or 1100". Each of the second cross beams 1240 may be substantially perpendicular to the Y direction. Some of the second cross beams 1240 may extend in the X direction between the side wall 1222 and the center beam 1250, and others may extend in the X direction between the side wall 1224 and the center beam 1250. When the layout of the battery assemblies 120 is C rows by D columns (where C is an integer of 1 or more and D is an integer of 2 or more), each column may be delineated by each of the second cross beams 1240. Each of the second cross beams 1240 may include a metal. Each of the second cross beams 1240 may include one or more of aluminum, aluminum alloy, steel, and stainless steel.

The center beam 1250 may be disposed on the base plate 1210. The center beam 1250 may be fixed to the base plate 1210 by bolting, welding, or the like. The center beam 1250 may isolate the battery modules 1100, 1100', or 1100" in the X direction. The center beam 1250 may be positioned between some of the battery modules 1100, 1100', or 1100" and others of the battery modules 1100, 1100', or 1100". The center beam 1250 may be substantially perpendicular to the X direction. The center beam 1250 may extend in the Y direction between the first cross beam 1230 and the side wall 1221. When the layout of the battery modules 1100, 1100', or 1100" is E rows by F columns (where E is an integer of 2 or more and F is an integer of 1 or more), each row may be delineated by the center beam 1250. The center beam 1250 may include a metal. The center beam 1250 may include one or more of aluminum, aluminum alloy, steel, and stainless steel.

The electronic components may be located between the first cross beam 1230 and the side wall 1221. The electronic components may include a Battery Management System (BMS), a Power Relay Assembly (PRA), and the like. The BMS may be configured to monitor the status of the battery cells 1110 such as voltage, current, and temperature, to uniformly balance the voltage and capacity among the battery cells 1110, and to control the charging and discharging of the battery cells 1110. The PRA may be configured to connect or disconnect a high-voltage circuit in accordance with a signal from the BMS so as to supply or cut off high-voltage current from the battery modules 1100, 1100', or 1100" to external loads such as a motor and an inverter. The PRA may be configured to mitigate voltage surges so as to prevent damage to external loads such as a motor and an inverter.

The pack lid may be coupled to the side walls 1221, 1222, 1223, 1224 by fasteners. The pack lid may cover the battery modules 1100, 1100', or 1100", the first cross beam 1230, the second cross beams 1240, the center beam 1250, and the electronic components. The pack lid may protect the battery modules 1100, 1100', or 1100" and the electronic components from external factors such as shock, vibration, dust, and moisture. A gasket may be interposed between the pack lid and the side walls 1221, 1222, 1223, 1224. The gasket may fill gaps that may form between the pack lid and the side walls 1221, 1222, 1223, 1224.

The above description is merely for illustrative purposes of the present disclosure. The scope of rights of the present disclosure shall be construed in accordance with the claims, and all technical ideas within a scope equivalent or equal thereto shall be construed as being included in the scope of rights of the present disclosure.

### [Description of Reference Numerals]

1000: BATTERY PACK
1100: BATTERY MODULE
1110: BATTERY CELL
1120: MODULE FRAME
1121: TOP PLATE
1121VH: VENT HOLE
1121BS: FIRST SURFACE
1121TS: SECOND SURFACE
1131: FIRST END PLATE
1132: SECOND END PLATE
1141: FIRST THERMAL BARRIER
1142: SECOND THERMAL BARRIER

## Claims

1. A battery module comprising:
battery cells;
a module frame accommodating the battery cells, wherein the module frame comprises a top plate comprising vent holes; and
a first thermal barrier disposed between the battery cells and the top plate.

2. The battery module of claim 1, wherein
the top plate comprises a first surface facing the battery cells, and
the first thermal barrier is coated on the first surface.

3. The battery module of claim 1, wherein
the first thermal barrier does not overlap the vent holes in a first direction perpendicular to the top plate.

4. The battery module of claim 1, wherein
a melting temperature of the first thermal barrier is higher than a melting temperature of the top plate.

5. A battery module comprising:
battery cells;
a module frame accommodating the battery cells, wherein the module frame comprises a top plate comprising vent holes; and
a second thermal barrier spaced apart from the battery cells with the top plate interposed therebetween.

6. The battery module of claim 5, wherein
the top plate comprises a second surface that is an opposite surface of a surface facing the battery cells, and
the second thermal barrier is coated on the second surface.

7. The battery module of claim 5, wherein
the second thermal barrier does not overlap the vent holes in a first direction perpendicular to the top plate.

8. The battery module of claim 5, wherein
a melting temperature of the second thermal barrier is higher than a melting temperature of the top plate.

9. A battery module comprising:
battery cells;
a module frame accommodating the battery cells, wherein the module frame comprises a top plate comprising vent holes;
a first thermal barrier disposed between the battery cells and the top plate; and
a second thermal barrier spaced apart from the battery cells with the top plate interposed therebetween.

10. The battery module of claim 9, wherein
the top plate comprises a first surface facing the battery cells and a second surface that is an opposite surface of the first surface,
the first thermal barrier is coated on the first surface, and
the second thermal barrier is coated on the second surface.

11. The battery module of claim 9, wherein
the first thermal barrier does not overlap the vent holes in a first direction perpendicular to the top plate,
the second thermal barrier does not overlap the vent holes in the first direction, and
the first thermal barrier fully overlaps the second thermal barrier in the first direction.

12. The battery module of claim 9, wherein
a melting temperature of the first thermal barrier is higher than a melting temperature of the top plate,
a melting temperature of the second thermal barrier is higher than a melting temperature of the top plate, and
a melting temperature of the first thermal barrier is equal to a melting temperature of the second thermal barrier.

13. A battery pack comprising:
a pack housing comprising a base plate and a side wall; and
battery modules disposed on the base plate, wherein
each of the battery modules is one of the battery modules of claims 1 through 12.
